**Europäisches Patentamt**

**European Patent Office**

**Office européen des brevets**

(19)

(11) Veröffentlichungsnummer: **0 051 754**
**A2**

(12) # EUROPÄISCHE PATENTANMELDUNG

(21) Anmeldenummer: **81108166.0**

(22) Anmeldetag: **10.10.81**

(51) Int. Cl.³: **G 11 B 27/34,** G 11 B 27/10,
**G 11 B 21/08**

(30) Priorität: **08.11.80 DE 3042273**

(43) Veröffentlichungstag der Anmeldung: **19.05.82**
**Patentblatt 82/20**

(84) Benannte Vertragsstaaten: **AT BE CH DE FR GB IT LI LU NL SE**

(71) Anmelder: **GRUNDIG E.M.V. Elektro-Mechanische Versuchsanstalt Max Grundig & Co. Kg.,
Kurgartenstrasse 37, D-8510 Fürth/Bayern (DE)**

(72) Erfinder: **Mayer, Walter, Dipl.-Phys., Hermann Löns Strasse 32b, D-8502 Zirndorf (DE)**
Erfinder: **Buss, Karl-Bernd, Dipl.-Ing., Grossgründlacher Hauptstrasse 31a, D-8500 Nuernberg 141 (DE)**

(74) Vertreter: **Voigt, Günter, Kurgartenstrasse 37, D-8510 Fürth (DE)**

(54) **Magnetischer Einzelbild-Massenspeicher.**

(57) Es wird eine Vorrichtung mit einem Magnetspeicher und mindestens einem Magnetkopf zur Speicherung einer großen Anzahl von Einzelbildern bei kurzen Zugriffszeiten beschrieben, wobei ein Endlosmagnetbandspeicher (10) mit einer Vielzahl untereinander und zur Hauptrichtung des Magnetbandes parallel verlaufender Aufzeichnungsspuren vorhanden ist, von denen zumindest eine als Suchspur (14) ausgebildet ist. Bei Verwendung einer Fernsehkamera für den Bildaufnahmebetrieb wird die Bildfrequenz der Fernsehkamera (27) durch den Magnetbandspeicher (10) synchronisiert.

- | -

MAGNETISCHER EINZELBILD-MASSENSPEICHER

Beschreibung

Die Erfindung bezieht sich auf eine Vorrichtung mit einem Magnetspeicher und mindestens einem Magnetkopf zur magnetischen Speicherung einer großen Anzahl von Einzelbildern bei kurzen Zugriffszeiten.

Einzelbild-Massenspeicher mit einer Kapazität von mehreren tausend Bildern, bei denen die Bilder in sehr kurzer Zeit abrufbar sein müssen, gewinnen in der Zugangskontrolle zu besonderen Sicherheitszonen in einem immer größer werdenden Umfang an Bedeutung.

Die bereits bekannten Videorecorder mit Schrägspuraufzeichnung können bei entsprechender Abwandlung für das schnelle Aufsuchen von Einzelbildern eingesetzt werden. Bei der oben erwähnten Bildkapazität sind jedoch Zugriffszeiten von weniger als 3 bis 5 Sekunden nicht möglich.

Hier bietet sich zunächst nur die Bildplatte an. Die Speicherkapazität einer Bildplatte ist jedoch relativ begrenzt.

Der Erfindung liegt die Aufgabe zugrunde, einen Einzelbild-Massenspeicher zu schaffen, der bei relativ großer Speicherkapazität sehr kurze Zugriffszeiten ermöglicht.

Die Lösung dieser Aufgabe erfolgt erfindungsgemäß durch die im kennzeichnenden Teil des Anspruchs 1 angegebenen Maßnahmen.

Vorteilhafte Weiterbildungen ergeben sich aus den Unteransprüchen.

Damit ergeben sich noch kürzere Zugriffszeiten als bei einer Platte. Für das System wird nur ein sehr einfaches Laufwerk für konstanten Bandantrieb erforderlich. Aufgrund der konstanten Bandgeschwindigkeit entfallen die bekannten Nachteile des LVR-Systems, bei dem das Band alle 2,5 Minuten in sehr kurzer Zeit abgebremst und wieder in der Gegenrichtung beschleunigt werden muß. Wegen der Kürze der Bandschleife bei der erfindungsgemäßen Vorrichtung kann diese mechanisch sehr einfach geführt werden. Die an sich bekannten Probleme eines Endlos-Bandes entfallen. Gegenüber einer Magnetspeicher-Platte kann bei der erfindungsgemäßen Vorrichtung die Bildkapazität über die Breite und Länge der Magnetbandschleife in weiten Grenzen erweitert werden, während die Kapazität der Platte derzeit auf etwa 1000 Bilder pro Plattenseite begrenzt ist. Darüber hinaus sind bei der erfindungsgemäßen Lösung bei einer vorgegebenen Anzahl abzurufender Bilder weniger Videoköpfe erforderlich als bei der Magnetspeicher-Platte.

Die Erfindung wird nachfolgend unter Bezugnahme auf die Zeichnungsfiguren beispielsweise erläutert. Es zeigen:

Fig. 1    ein Blockschaltbild des Magnetband-Einzelbild-Massenspeichers und

Fig. 2    einen schematischen Überblick über die Anordnung der einzelnen Auswertebereiche in Querrichtung des Bandes.

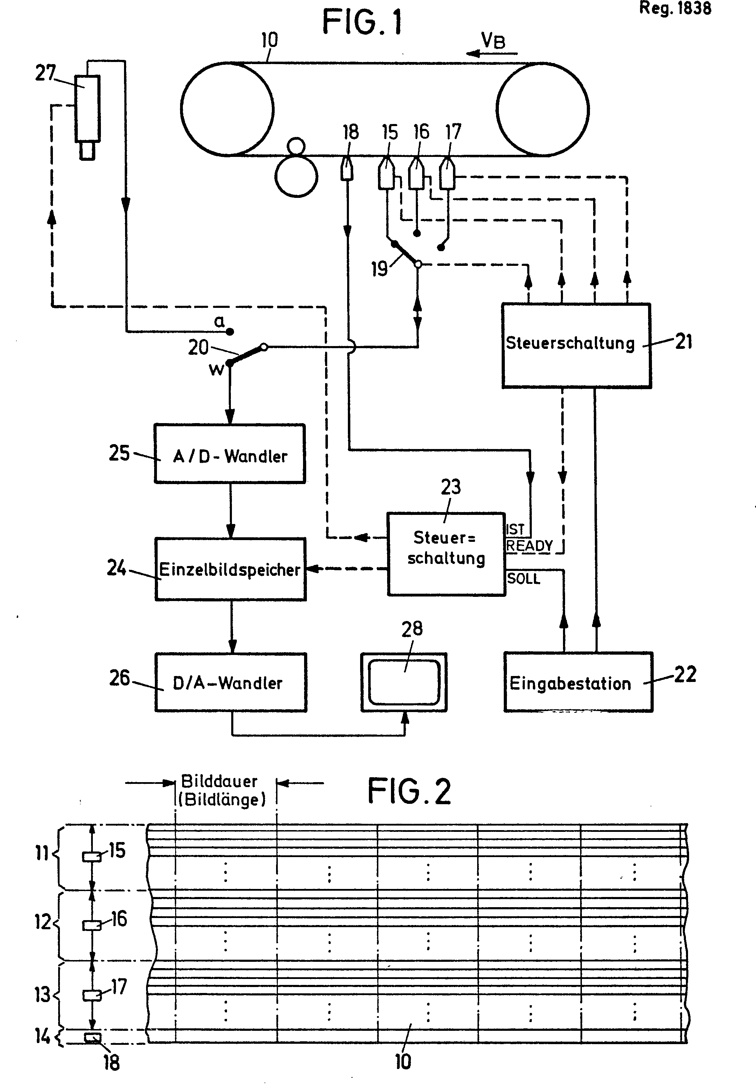

Fig. 1 zeigt ein Endlosmagnetband 10 das als Magnetbandschleife ausgebildet ist, und über einen Bandantrieb mit konstanter Bandgeschwindigkeit bewegt wird. Auf dem Band befinden sich die abgespeicherten und in kurzer Zugriffszeit abrufbaren Bilder auf einer bestimmten Anzahl Längsspuren, wobei jede Längsspur aufeinanderfolgend eine bestimmte Anzahl Bilder enthält, wie auch aus Fig. 2 ersichtlich. Die Längsspuren sind in mehrere Auswertebereiche unterteilt (Fig. 2). Im hier gewählten Ausführungsbeispiel sind drei Auswertebereiche 11 bis 13 sowie eine Suchspur 14 vorhanden. Jeder Auswertebereich 11 bis 13 wird durch einen in der Höhe verstellbaren Videokopf 15 bis 17 ausgewertet. Ein zusätzlicher Magnetkopf 18 wertet die Informationen der Suchspur 14 aus.

Die Videoköpfe 15 bis 17 sind über einen elektronischen Schalter 19 mit einem Schalter 20, der ebenfalls ein elektronischer Schalter sein kann, verbunden.

Bei Wiedergabebetrieb, d. h. bei der Suche eines abgespeicherten Bildes befindet sich der Schalter 20 in der Stellung w, d. h. in Verbindung mit der Videosignalaufbereitung (Wiedergabe). Bei der Suche eines bestimmten Bildes wird durch die Stellung des Schalters 19 festgelegt, welcher der drei Auswertebereiche 11 bis 13 bei der Auswertung zu berücksichtigen ist. Über die mit Hilfe eines Präzisions-Schrittmotors bewirkte Höhenverstellung der Videoköpfe 15, 16 bzw. 17 kann innerhalb eines betreffenden Auswertebereiches 11, 12, 13 die jeweils gewünschte Bildspur angewählt werden. Die Höhenverstellung der Videoköpfe 15 bis 17 sowie die Betätigung des elektronischen Schalters 19 erfolgt über eine Steuerschaltung 21. Über eine Eingabestation 22 wird der Steuerschaltung 21 die gesuchte Bildnummer in codierter Form als Eingangssignal mitgeteilt. Durch Decodierung wird aus der Bildnummer der zugehörige Auswertebereich 11, 12, 13 sowie die das Bild enthaltende Spur gewonnen.

Aus der jeweils gewünschten Spur ergibt sich dann die im Einzelfall notwendige Höhenverstellung des Videokopfes 15, 16, 17.

Weiter ist eine zweite Steuerschaltung 23 vorhanden, die in Aktion tritt, sobald die erste Steuerschaltung 21 ihren Steuervorgang beendet hat. Dies ist dann der Fall, wenn bei einer Bildsuche der elektronische Schalter 19 mit dem richtigen Videokopf 15, 16, 17 verbunden und dieser Videokopf 15, 16, 17 auf die jeweils gewünschte Bildspur geführt wurde. Bei Vorliegen eines von der ersten Steuerschaltung 21 kommenden Bereitschaftssignals "READY" wird mit Hilfe der zweiten Steuerschaltung 23 aus der auszuwertenden Bildspur das gewünschte Bild ausgewählt. Die auf dem Endlos-Magnetband aufgezeichneten Bilder passieren in ständiger Wiederholung den zugehörigen Videokopf 15, 16, 17. Die Bildauswahl innerhalb der Spur geschieht über die zweite Steuerschaltung 23 aufgrund eines Ist-Soll-Vergleichs. Als Soll-Signal erhält die zweite Steuerschaltung 23 die gesuchte Bildnummer. Aus dieser ergibt sich durch die Codierung die Nummer der Bildspalte, d. h., die Position des gesuchten Bildsignals auf der bereits vorher bestimmten Bildspur. Das Ist-Signal für die zweite Steuerschaltung 23 liefert der Spursuchkopf 18. Dieser wertet die Suchspur 14 aus. Bei Übereinstimmung von Ist- und Soll-Signal erfolgt mit Hilfe der zweiten Steuerschaltung 23 die Übernahme des jeweils auszuwertenden Bildsignals in einen Einzelbildspeicher 24, aus dem es anschließend beliebig oft ausgelesen und auf einem Monitor 28 dargestellt werden kann. Als Einzelbildspeicher 24 kommt in erster Linie ein Digitalspeicher in Betracht, so daß vor der Einspeicherung mittels eines Analog-Digital-Wandlers 25 eine Analog-Digital-Wandlung durchgeführt werden muß und beim Auslesen mittels eines Digital-Analog-Wandlers 26 eine Digital-Analog-Wandlung. Grundsätzlich kann jedoch auch als Einzelbildspeicher ein Analogspeicher, beispielsweise ein mit feststehendem Band arbeitender Videorecorder zum Einsatz kommen, dadurch erübrigt sich eine Analog-Digital- bzw. Digital-Analog-Wandlung.

Zur Aufnahme eines Bildes in den Magnetband-Einzelbild-Massenspeicher wird der Schalter 20 in die Position a gebracht. In dieser Stellung wird eine Verbindung zwischen einer Fernsehkamera 27 und dem Magnetbandspeicher über die Schalter 20 und 19 sowie den jeweils angeschalteten Videokopf 15, 16, 17 hergestellt. Durch Eingabe einer Bildnummer wird in ähnlicher Weise wie beim Wiedergabebetrieb über die erste Steuerschaltung 21 und die zweite Steuerschaltung 23 die Position des Bildes auf einer gewünschten Spur festgelegt. Bei Erreichen dieser Position, was über die zweite Steuerschaltung 23 mit Hilfe des Suchspurkopfes 18 festgestellt wird, wird über die zweite Steuerschaltung 23 das momentan anstehende Einzelbild des Videosignals der Fernsehkamera aufgetastet und an der gewünschten Stelle auf das Magnetband 10 aufgezeichnet. Zur exakten Positionierung solcher

0051754

Einzelbilder auf dem Magnetband 10 müssen Anfang und Ende eines aufzuzeichnenden Videosignals mit dem Anfang und Ende einer Bildspalte übereinstimmen. Dies wird dadurch erreicht, daß die Bildfrequenz der Fernsehkamera 27 über die Suchspur 14 mit dem Anfang und dem Ende der Bildspalten synchronisiert wird.

Es läßt sich mathematisch nachweisen, daß es bei vorgegebener Anzahl der abzuspeichernden Bilder gewisse Optimallösungen für Spurenzahl und Bildspalten gibt. Geht man davon aus, daß die Bilddauer und die Verstellzeit des Videokopfes von einer Spur zur nächsten jeweils 20 ms betragen, so können bei Vorhandensein von drei Auswertebereichen 3 · 1250 = 3750 Bilder mit einer maximalen Zugriffszeit von 1 sec ausgewertet werden. Dabei wird davon ausgegangen, daß der Videokopf 15, 16, 17 jeweils aus einer Mittellage seines Auswertebereichs 11, 12, 13 startet, d. h. die längste Dauer einer Kopfhöhenverstellung bzw. die maximale Kopfzugriffszeit zu einer Spur 0,5 sec beträgt. Dabei sind dann jedem Videokopf 15, 16, 17 fünfzig Spuren zugeordnet und auf dem Magnetband 10 in jeder Spur 25 Bilder angeordnet.

Während der Betrachtungszeit des ausgesuchten und im Einzelbildspeicher gespeicherten Bildes hat der zuletzt aktivierte Videokopf 15, 16, 17 hinreichend Zeit, um von der Bildspur des zuletzt gesuchten Bildes in die Mitte seines Auswertebereichs 11, 12, 13 zurückzukehren.

Die Qualität des wiedergegebenen Bildes wird im wesentlichen durch die Breite der aufgezeichneten Bildspuren sowie die geometrische Länge eines Bildes auf dem Band bestimmt. Für Portrait-Aufnahmen erscheinen 8 cm Bildlänge als ausreichend. Bei 25 Bildern pro Spur ergibt sich somit eine Länge der Bandschleife von 2 m. Für den Spurabstand wird der bei Längsspuraufzeichnungen bereits zum Einsatz kommende Wert von 40 $\mu$m angesetzt. Für einen Auswertebereich sind somit 2 mm Breite erforderlich. Mit entsprechend vielen Auswertebereichen ist das oben beschriebene System hinsichtlich der Anzahl der auszuwertenden Bilder fast beliebig erweiterbar. So können unter Beibehaltung der oben angegebenen Orientierungswerte auf einem Halb-Zoll-Band sechs Auswertebereiche zu je 1250 Bildern, d. h. 7500 Bilder, abgespeichert werden. Diese 7500 Bilder sind mit einer Zugriffszeit von weniger als einer Sekunde abrufbar.

Da der Magnetband-Speicher als Endlos-Speicher ausgebildet ist, entfällt die beim LVR-Verfahren in Erscheinung tretende Problematik des schnellen Abbremsens und des schnellen Wiederbeschleunigens des Magnetbandes in der Gegenrichtung.

Die oben zugrundegelegte maximale Zugriffszeit trifft jeweils nur für den ungünstigsten Fall zu. Die mittlere Zugriffszeit beträgt unter den oben geschilderten Umständen lediglich 50 % der maximalen Zugriffszeit. Bei einer mittleren Zugriffszeit von 1 sec beträgt die Speicherkapazität der oben beschriebenen entsprechend modifizierten Endlos-Magnetband-Speichervorrichtung, das
4fache, d. h. es sind in dieser Zeit pro Videokopf
5000 Bilder abrufbar.

# MAGNETISCHER EINZELBILD-MASSENSPEICHER

## Patentansprüche

1. Vorrichtung mit einem Magnetspeicher und mindestens einem Magnetkopf zur Speicherung einer großen Anzahl von Einzelbildern bei kurzen Zugriffszeiten, d a d u r c h   g e k e n n z e i c h n e t , daß ein Endlosmagnetbandspeicher (10) mit einer Vielzahl untereinander und zur Hauptrichtung des Magnetbandes parallel verlaufender Aufzeichnungsspuren vorhanden ist, von denen zumindest eine als Suchspur (14) ausgebildet ist.

2. Vorrichtung nach Anspruch 1 mit einem Bildschirm zur Wiedergabe der aufzuzeichnenden bzw. aufgezeichneten Einzelbilder, d a d u r c h   g e k e n n z e i c h - n e t ,   daß ein Zwischenbildspeicher (24) vorhanden ist, in den die Bildsignale eingebbar und beliebig oft auslesbar sind.

3. Vorrichtung nach Anspruch 1 oder 2, d a - d u r c h  g e k e n n z e i c h n e t , daß das Verhältnis der Anzahl Spuren zur Anzahl Bilder pro Spur unter Berücksichtigung der Suchgeschwindigkeiten in Längs- und Querrichtung eine insgesamt minimale Zugriffszeit gewährleistet.

4. Vorrichtung nach Anspruch 1 bis 3, d a - d u r c h  g e k e n n z e i c h n e t , daß mehrere jeweils aus einer Mehrzahl von Aufzeichnungsspuren und einem zugehörigen Magnetkopf bestehende Auswertebereiche (11, 12, 13) auf dem Magnetband vorhanden sind.

5. Vorrichtung nach einem der Ansprüche 1 bis 4, d a d u r c h  g e k e n n z e i c h n e t , daß sich die Ruhelage der Magnetköpfe (15, 16, 17) mit der Mitte der zugehörigen Auswertebereiche (11, 12, 13) deckt.

6. Vorrichtung nach einem der Ansprüche 1 bis 5 mit einer Fernsehkamera für den Bildaufnahmebetrieb, d a - d u r c h  g e k e n n z e i c h n e t , daß die Bildfrequenz der Fernsehkamera (27) durch den Magnetbandspeicher (10) synchronisierbar ist.

7. Vorrichtung nach Anspruch 1 bis 6, d a d u r c h  g e k e n n z e i c h n e t , daß die Suchspur (14) des Magnetbandspeichers (10) auch Bild-Synchronsignale enthält.

- 12 -

0051754

8. Vorrichtung nach Anspruch 2, d a d u r c h
g e k e n n z e i c h n e t , daß es sich beim Zwischenbildspeicher (24) um einen Analogspeicher handelt.

9. Vorrichtung nach Anspruch 2, d a d u r c h
g e k e n n z e i c h n e t , daß es sich beim Zwischenbildspeicher (24) um einen Digital-Speicher handelt, der
über Analog-Digital-Wandler (25) bzw. Digital-Analog-
Wandler (26) elektrisch mit den zugehörigen Teilen der
Vorrichtung verbunden ist.

FIG.1

0051754
Reg.1838

FIG.2

Bilddauer
(Bildlänge)